# EUROPEAN PATENT APPLICATION

(11) **EP 1 727 057 A2**
(43) Date of publication of application: **29.11.2006**
(21) Application number: 06008660.0
(22) Date of filing: 26.04.2006
(51) Int. Cl.: G06F 17/30

(54) **Apparatus and method for displaying file location information**

(30) Priority: 17.05.2005 KR 20050041237
(71) Applicant: Samsung Electronics Co., Ltd., Suwon-si, Gyeonggi-Do (KR)
(72) Inventor: Lim, Dok-Shin, Suwon-si Gyeonggi-do (KR); Shin, Young-Sun, Suwon-si Gyeonggi-do (KR)
(74) Representative: Grünecker, Kinkeldey, Stockmair & Schwanhäusser Anwaltssozietät

(57) **Abstract**

A method of displaying file information in an apparatus for displaying file information in a portable terminal using a multi-layered file system includes the steps of: determining whether a layer of a newly activated file is one-level higher or lower than before; and displaying a layer position of the newly activated file by reducing one of existing icons if the layer of the newly activated file is one-level higher than before and displaying one more icon if the layer of the newly activated file is one-level lower than before. The apparatus includes a memory for storing files in a multi-layered file system; a display unit for displaying location information of a currently activated file among the files stored in the memory using icons; a key input unit for receiving a key input for activating a predetermined file; and a controller for reducing one of icons displayed on the display unit if a layer of a changed file is one-level higher than before and displaying one more icon on the display unit if the layer of the changed file is one-level lower than before, whenever an activated file is changed using the key input unit.

## Description

The present invention relates generally to an apparatus and method for displaying file information in a multi-layered file system of a portable terminal, and in particular, to an apparatus and method for displaying file location information in a portable terminal.

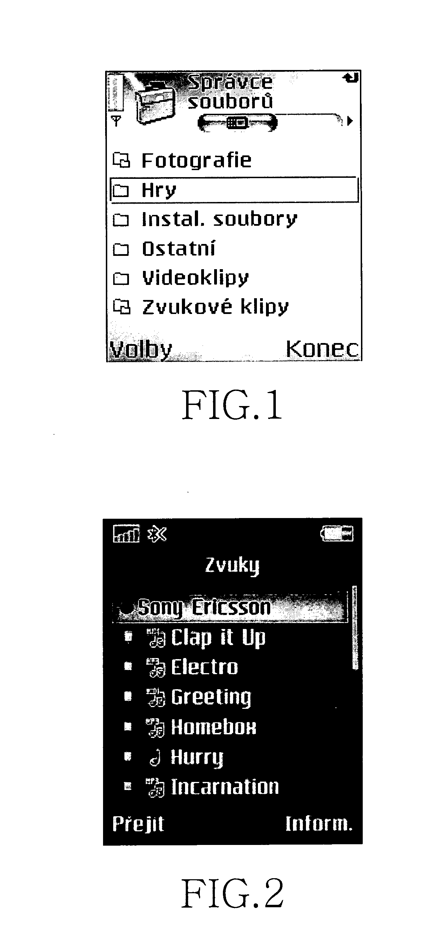

A portable terminal having a small sized screen cannot display file location information using a drop-down structure of which is typically used in a personal computer. This is due to the limitation of screen size when the portable terminal uses a multi layer structure as a file system. A conventional portable terminal using a multi layer structure will now be described with reference to FIGs. 1 and 2.

In a portable terminal displaying file location information illustrated in FIG. 1 icons indicating an internal memory and an external memory that are storage media within an uppermost layer are horizontally arranged. The horizontal arrangement of these icons allows a user to select an icon. If the user selects a storage medium within the uppermost layer, the portable terminal then vertically displays files stored in the selected storage media. If the user selects a desired file among the displayed files, the portable terminal displays files in a lower layer of the selected file or executes the selected file.

A portable terminal displaying file location information as illustrated in FIG. 2 displays a storage location in front of each file name. As illustrated in FIGs. 1 and 2, a portable terminal having a small sized screen is unable to display file location information, that is information on which layers of a file currently belongs even if it utilizes a multi-layered file system.

The present invention is to substantially solve at least the above problems and/or disadvantages and to provide at least the advantages set forth below. Accordingly, the object of the present invention is to provide an apparatus within a portable terminal for displaying file information in a small space and a method thereof.

This object is solved by the subject matter of the independent claims.

Preferred embodiments are defined in the dependent claims.

According to one aspect of the present invention, there is provided an apparatus within a portable terminal for displaying file information, the apparatus having a memory for storing files in a multi-layered file system; a display unit for displaying location information of a currently activated file among the files stored in the memory using icons that identify the files; a key input unit for purpose of receiving a key input for activating a predetermined file; and a controller for reducing one of the icons displayed on the display unit provided a layer of a changed file is one-level higher than before and for displaying one more icon on the display unit should the layer of the changed file be one-level lower than before, whenever an activated file is changed using the key input unit.

According to still another aspect of the present invention, there is provided a method of displaying file information in an apparatus for displaying file information using a multi-layered file system, the method includes the steps of determining whether a layer of a newly activated file is one-level higher or lower than before; if so reducing one of the existing icons; and displaying a layer position of the newly activated file by; and displaying one more icon if the layer of the newly activated file is one-level lower than before.

The present invention will become more apparent from the following detailed description when taken in conjunction with the accompanying drawings in which:
FIGs. 1 and 2 are illustrations of screens on which file information is displayed in conventional portable terminals using a multi-layered file system;
FIG. 3 is a block diagram schematically illustrating an apparatus for displaying file information according to a preferred embodiment of the present invention;
FIG. 4 is an illustration of a display screen on which file location information is displayed according to of the present invention;
FIG. 5 is an illustration of a display screen on which file information in a uppermost layer is displayed according to the present invention;
FIGs. 6 to 8 are illustrations of display screens on which file location information is displayed according to the present invention; and
FIG. 9 is a flowchart illustrating a method of displaying file information according to the present invention.

Preferred embodiments of the present invention will be described herein below with reference to the accompanying drawings. In the drawings, the same or similar elements are denoted by the same reference numerals even though they are depicted in different drawings. In the following description, well-known functions or constructions are not described in detail since they would obscure the invention in unnecessary detail.

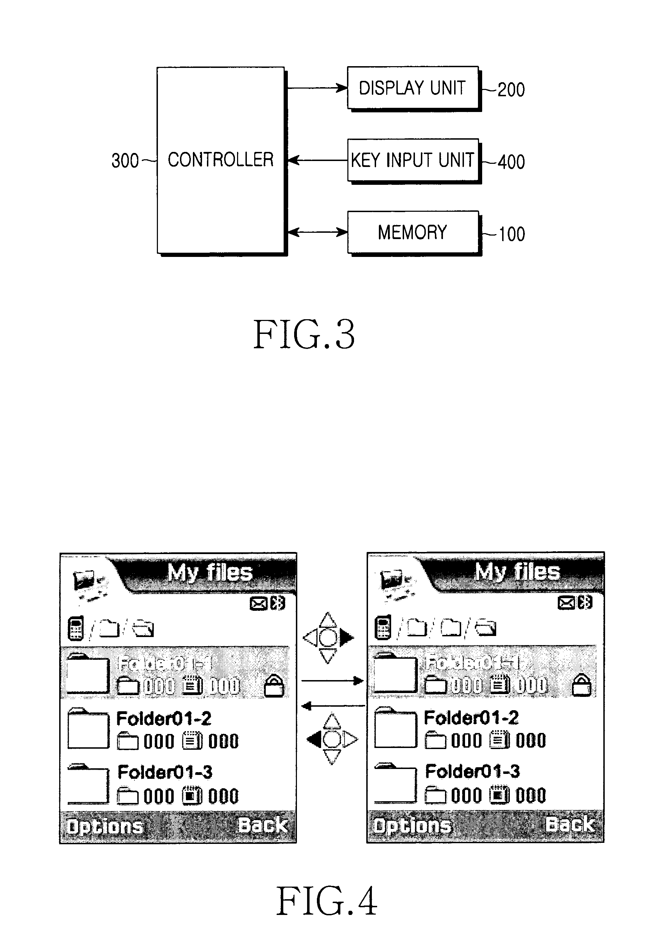

FIG. 3 is a block diagram schematically illustrating an apparatus for displaying file information according to the present invention.

A memory 100 of the file information display apparatus of FIG. 3 using a multi-layered file system for storing files according to the multi-layered file system. A display unit 200 for displaying information on files stored in the memory 100. In the current embodiment, there is a controller 300 for controlling the display unit 200 to display, location information of a currently activated file using icons. A key input unit 400 that includes but not limited to up, down, left, and right direction keys for a user to search and activate a file. The controller 300 reduces one of the icons displayed on the display unit 200 when a layer of a changed file is one-level higher than before and displays one more icon on the display unit 200 when the layer of the changed file is one-level lower than before, whenever an activated file is changed using the key input unit 400.

A method of displaying file location information using icons in the file information display apparatus will now be described in detail with reference to FIG. 4. FIG. 4 is an illustration of a display screen on which the file location information is displayed according to the present invention.

Referring to the display screen of FIG. 4, a currently activated file is located in an n^{th} layer, and the controller 300 displays location information of the n^{th} layer in the upside using a folder shaped icon. Two currently displayed folder shaped icons indicate that a layer of the currently activated file is a second-level lower layer in an internal memory of the file information display apparatus. The controller 300 displays the internal memory using a portable terminal icon in the left side of the folder shaped icons. That is, since information on the layer of the currently activated file can be displayed within a small sized screen, a portable terminal using a file system can display file location information in a small space using the above-described method.

The user can move the layer of the currently activated file to one-level lower or higher using the left or right directional key of the key input unit 400. The user can easily move the layer of the currently activated file while viewing file location information indicated by folder shaped icons that are displayed on the display unit 200. This is accomplished by assigning inter-layer movement to the left or right directional key. Up and down directional keys the key input unit 400 are used to select a file to be activated among files existing in a current layer.

If the right directional key of the key input unit 400 is selected in a state where a file is activated in the n^{th} layer as illustrated within the leftmost screen of FIG. 4, the controller 300 will display information on files in an (n+1)^{th} layer one-level lower than the n^{th} layer. The controller 300 increases one folder shaped icon according to the inter-layer movement to a one-level lower layer than the n^{th} layer and displays the information on the files in the (n+1)^{th} layer on the display unit 200 as illustrated in the rightmost screen of FIG. 4. Here, if the left directional key of the key input unit 400 is selected, the controller 300 reduces one of folder shaped icons displayed on the display unit 200 and displays the existing files within the n^{th} layer on the display unit 200 as illustrated in the left most screen of FIG. 4.

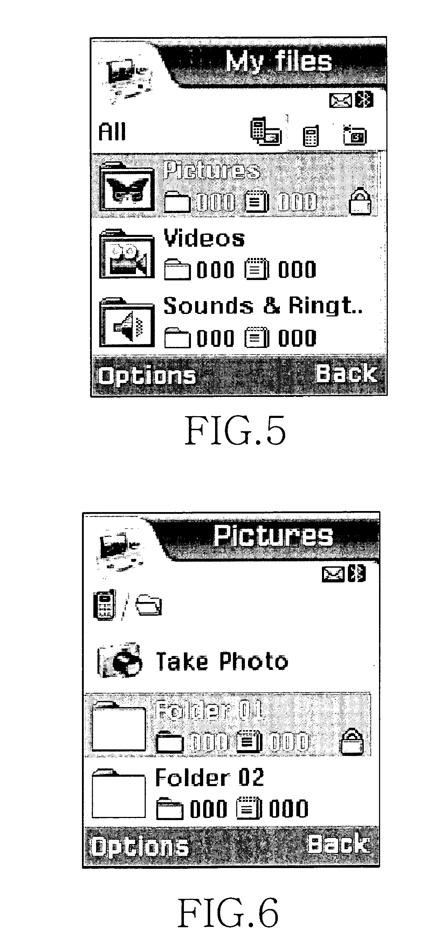

In the uppermost layer of files exists the internal memory and an external memory of the file information display apparatus. Thus, the controller 300 displays icons indicating the internal memory and the external memory, rather than the folder shaped icon as well as displays files existing in an activated memory on the display unit 200 as illustrated in FIG. 5.

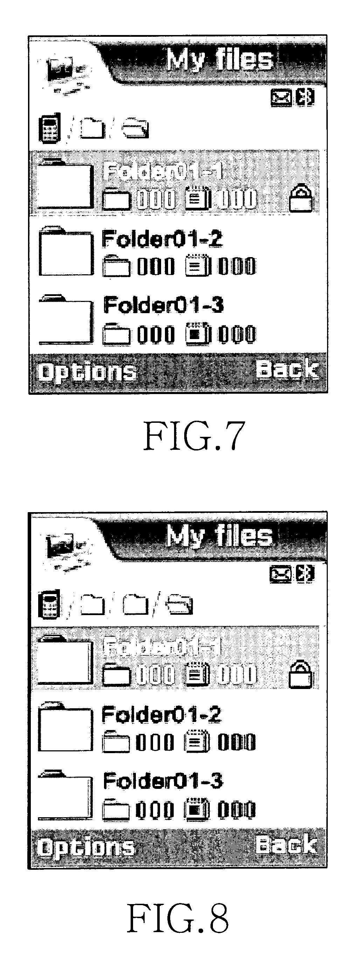

Every time the user selects the right directional key of the key input unit 400 in the uppermost layer as illustrated in FIG. 5, the controller 300 displays information on files in a one-level lower layer. If the user selects the right directional key once, the controller 300 displays a single folder shaped icon on the display unit 200 to indicate a one-level lower layer than the uppermost layer. In this case, the controller 300 also displays information on files in the one-level lower layer than the uppermost layer as illustrated in FIG. 6. FIG. 7 illustrates a display screen when the user selects the right directional key once more in the state of FIG. 6, and FIG. 8 illustrates a display screen when the user selects the right directional key once more in the state of FIG. 7. If the user selects the left directional key once in the state of FIG. 8, the display screen of FIG. 7 is displayed, and every time the user selects the left directional key, information on files in a one-level higher layer is displayed on the display unit 200.

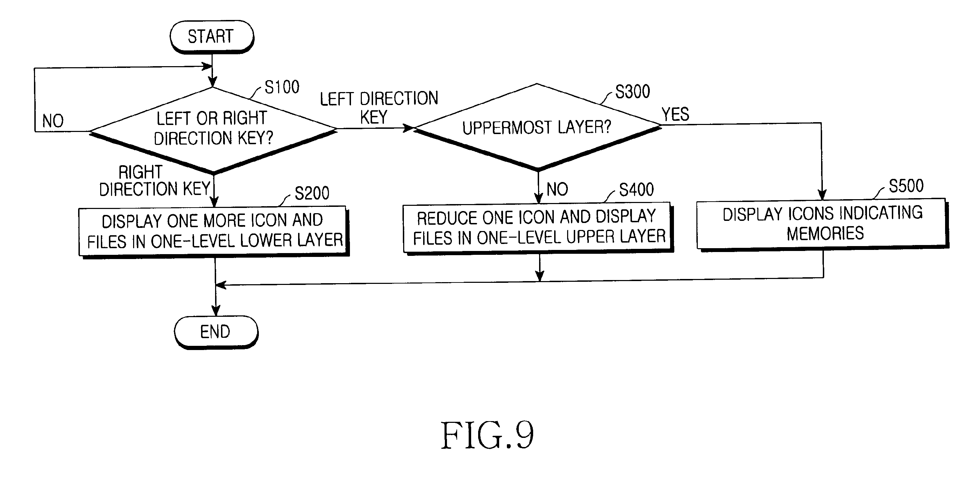

A method of displaying information regarding on which layer a currently activated file belongs to in the file information display apparatus according to the present invention will be described below in detail with reference to FIG. 9. FIG. 9 is a flowchart illustrating a method of displaying file information according to present invention.

The user of the file information display apparatus can search for a desired file by selecting a directional key of the key input unit 400. In response to the file search, folder shaped icons indicating the level of a layer of a currently activated file and files existing in the current layer are displayed on the display unit 200. In this state, the controller 300 determines in step S100 whether the left or right directional key of the key input unit 400 is selected.

If the right directional key is selected as the determination result, the controller 300 displays one more folder shaped icon on the display unit 200 to indicate that a changed layer of files is one-level lower than before. In step S200, the controller 300 displays information on files existing in the changed layer, i.e., the layer one-level lower than before, on the display unit 200.

If the left directional key is selected as the determination result, the controller determines in step S300 whether a layer to be changed is the uppermost layer If the layer to be changed is not the uppermost layer as the determination result of step S300, the controller 300 reduces one of the folder shaped icons displayed on the display unit 200 to indicate that the changed layer is one-level upper than before. In step S400, the controller 300 displays information on files existing in the changed layer, i.e., the layer one-level upper than before, on the display unit 200.

If the layer to be changed is the uppermost layer as the determination result of step S300, a current layer is one-level lower than the uppermost layer. Thus, a single folder shaped icon is currently displayed on the display unit 200. In step S500, the controller 300 removes the single folder shaped icon and displays icons indicating that the changed layer is the uppermost layer, i.e., icons indicating memories included in the file information display apparatus, on the display unit 200.

As described above, according to the present invention, by displaying information regarding which layer a currently activated file belongs to using icons, file location information can be hierarchically displayed even using a small sized screen of a portable terminal using a multi-layered file system.

In addition, by displaying the file location information using icons, space utilization in the small sized screen can be maximized.

In addition, by assigning inter-layer movement to a left or right directional key of the key input unit 400, a user can easily move a file layer while viewing file location information indicated by folder shaped icons.

While the invention has been shown and described with reference to a certain preferred embodiment thereof, it will be understood by those skilled in the art that various changes in form and details may be made therein without departing from the scope of the invention as defined by the appended claims.

## Claims

1. An apparatus for use in a portable terminal for displaying file information, the apparatus comprising:
a memory for storing files using a multi-layered file system method;
a display unit for displaying location information of a currently activated file among the files stored in the memory using icons;
a key input unit for inputting a key for activating a predetermined file; and
a controller for reducing one of icons displayed on the display unit if a layer of a changed file is one-level higher than before and displaying one more icon on the display unit if the layer of the changed file is one-level lower than before, whenever an activated file is changed using the key input unit.

2. The apparatus of claim 1, wherein the icons are shaped like a folder.

3. The apparatus of claim 1 or 2, wherein the key input unit comprises up, down, left, and right directional keys used for selecting a file to be activated for which the controller detects inter-layer movement when the left or right directional key is input.

4. The apparatus of claim 3, wherein the controller changes a layer of a currently activated file to a layer one-level higher than before if the left directional key is inputted.

5. The apparatus of claim 3 or 4, wherein the controller changes a layer of a currently activated file to a layer one-level lower than before if the right directional key is input.

6. The apparatus of one of claims 3 to 5, wherein the controller changes a file to be activated among files existing in the same layer in the up or down direction if the up or down directional key is input.

7. The apparatus of one of claims 1 to 6, wherein the controller displays location information of files in the uppermost layer using icons indicating memories included in the apparatus.

8. The apparatus of claim 7, wherein the memories included in the apparatus comprise an internal memory and an external memory.

9. A method of displaying file information in an apparatus for displaying file information using a multi-layered file system; the method comprising the steps of:
determining whether a layer of a newly activated file is one-level higher or lower than before; and
displaying a layer position of the newly activated file by reducing one of existing icons if the layer of the newly activated file is one-level higher than before and displaying one more icon if the layer of the newly activated file is one-level lower than before.

10. The method of claim 9, further comprising the step of displaying icons indicating memories included in the apparatus if the layer position of the newly activated file is the uppermost layer.

11. The method of claim 10, wherein the memories included in the apparatus comprise an internal memory and an external memory.

12. The method of claim 9, wherein the icons are a shaped like a folder.

13. The method of one of claims 9 to 12, wherein inter-layer movement is achieved when the left or right directional key is input.

14. The method of claim 13, wherein, if the left directional key is input, the layer position of the newly activated file is changed to a layer one-level higher than before.

15. The method of claim 13 or 14, wherein, if the right directional key is input, the layer position of the newly activated file is changed to a layer one-level lower than before.

16. The method of one of claims 9 to 15, wherein, if the up or down directional key is input, a file to be activated among files existing in the same layer is changed.
